# EUROPÄISCHE PATENTANMELDUNG

(11) **EP 4 707 223 A1**
(43) Veröffentlichungstag der Anmeldung: **11.03.2026**
(21) Anmeldenummer: 25195217.2
(22) Anmeldetag: 11.08.2025
(51) Int. Cl.: B66F 9/075, B66F 17/00

(54) **MITNAHMESTAPLER**

(30) Priorität: 06.09.2024 AT 5011524 U
(71) Anmelder: Palfinger AG, 5101 Bergheim bei Salzburg (AT)
(72) Erfinder: SCHLAGER-HASLAUER, Andreas, 5101 Bergheim bei Salzburg (AT); HASLAUER, Mario, 5101 Bergheim bei Salzburg (AT)
(74) Vertreter: Torggler & Hofmann Patentanwälte - Innsbruck

(57) **Zusammenfassung**

Mitnahmestapler (1), mit wenigstens:
- einem anhebbaren und absenkbaren Lastaufnahmemittel (2)
- wenigstens drei Rädern (3), mit welchen der Mitnahmestapler (1) auf einem Untergrund mit einer Fahrgeschwindigkeit (v) verfahrbar ist, wobei von den wenigstens drei Rädern (3) wenigstens ein Rad (3) motorisch antreibbar ist und wenigstens zwei Räder (3) an jeweils einem ein- und ausfahrbaren Teleskoparm (4) angeordnet sind
- einem Motor (5) zum Antreiben des wenigstens einen antreibbaren Rads (3)
- einer Motorsteuerung (6) zum Ansteuern des Motors (5) unter Berücksichtigung eines Bedienbefehls eines Bedieners, vorzugsweise Fahrers, des Mitnahmestaplers
wobei der Mitnahmestapler (1) eine Vorrichtung (7) zum automatischen Bestimmen eines Ein- oder Ausfahrzustandes wenigstens eines der wenigstens zwei Teleskoparme (4) aufweist.

## Beschreibung

Die Offenbarung betrifft einen Mitnahmestapler mit den Merkmalen des Oberbegriffs des Anspruchs 1.

Derartige Mitnahmestapler sind seit langem bekannt. Die Funktionalität der mit Rädern versehenen ein- und ausfahrbaren Teleskoparme wird dazu genutzt, um bei einem Montageprozess an einem Trägerfahrzeug, beispielhaft ein LKW, den Platzbedarf so weit zu optimieren, dass es zu einer günstigen Situation im montierten Zustand kommt. Diese Anwendung ist auch die einzig zulässige, bei der die Teleskoparme eingefahren sein dürfen. Für den ordentlichen Betrieb (dem Heben, Transportieren und Absenken von Lasten mit dem Lastaufnahmemittel) sind ausgefahrene Teleskoparme vorgeschrieben.

Aus dieser Konstellation ergibt sich die Gefahr, dass ein Fahrer des Mitnahmestaplers den Zustand der eingefahrenen Teleskoparme, zum Beispiel aus Zeitmangel, vorschriftswidrig auch für den ordentlichen Betrieb nutzt, was zu gefährlichen Situationen führen kann, wie beispielhaft dem Verlust der Standsicherheit oder dem Verlieren von Lasten durch das Kippen des Mitnahmestaplers.

Es ist eine Aufgabe, einen gattungsgemäßen Mitnahmestapler derart weiterzubilden, dass eine erhöhte Sicherheit, insbesondere auch bei nicht voll ausgefahrenen Teleskoparmen, gegeben ist.

Diese Aufgabe wird gelöst durch einen Mitnahmestapler mit den Merkmalen des Anspruchs 1.

Ein solcher Mitnahmestapler weist wenigstens auf:
- ein anhebbares und absenkbares Lastaufnahmemittel
- wenigstens drei Räder, mit welchen der Mitnahmestapler auf einem Untergrund mit einer Fahrgeschwindigkeit verfahrbar ist, wobei von den wenigstens drei Rädern wenigstens ein Rad motorisch antreibbar ist und wenigstens zwei Räder an jeweils einem ein- und ausfahrbaren Teleskoparm angeordnet sind
- einen Motor zum Antreiben des wenigstens einen antreibbaren Rads
- eine Motorsteuerung zum Ansteuern des Motors unter Berücksichtigung eines Bedienbefehls eines Bedieners, vorzugsweise Fahrers, des Mitnahmestaplers
- eine Vorrichtung zum automatischen Bestimmen eines Ein- oder Ausfahrzustandes von wenigstens einem der wenigstens zwei Teleskoparme, d. h. von nur einem der wenigstens zwei Teleskoparme oder von zwei oder mehreren - bevorzugt von allen
   - der wenigstens zwei Teleskoparme

Die Vorrichtung zum automatischen Bestimmen eines Ein- oder Ausfahrzustandes des wenigstens einen der wenigstens zwei Teleskoparme gestattet eine Erhöhung der Sicherheit des Betriebs des Mitnahmestaplers in Abhängigkeit des automatisch bestimmten Ein- oder Ausfahrzustandes des wenigstens einen der wenigstens zwei Teleskoparme.

Vorteilhafte Ausführungsformen sind in den abhängigen Ansprüchen definiert.

Beispielsweise kann eine Vorrichtung, vorzugsweise eine Steuerung, vorgesehen sein, welche dazu konfiguriert ist, in Abhängigkeit des automatischen bestimmten Ein- oder Ausfahrzustandes des wenigstens einen der wenigstens zwei Teleskoparme eine Signalvorrichtung zur Abgabe oder Anzeige eines Signals zu betätigen oder anzusteuern. Im einfachsten Fall kann es sich bei der Vorrichtung um einen Schalter handeln, der durch den wenigstens einen der wenigstens zwei Teleskoparme in einer vorbestimmten Position betätigt wird und durch Herstellen eines elektrischen Kontakts die Signalvorrichtung betätigt. Eine Erhöhung der Sicherheit ergibt sich dadurch, dass ein Bediener, vorzugsweise Fahrer, des Mitnahmestaplers durch die Signalvorrichtung darauf aufmerksam gemacht wird, dass ein vorbestimmter Zustand des Ein- oder Ausfahrzustandes des wenigstens einen der wenigstens zwei Teleskoparme vorliegt oder nicht vorliegt. Beispielsweise kann eine Warnlampe aktiviert werden und/oder ein akustisches Signal abgegeben werden und/oder eine digitale Darstellung auf einem digitalen Display erfolgen, wenn der Ein- oder Ausfahrzustand des wenigstens einen Teleskoparms nicht dem vorbestimmten Zustand entspricht, der wenigstens eine Teleskoparm beispielsweise nicht voll ausgefahren ist. Der Bediener oder Fahrer des Mitnahmestaplers kann dann den vorbestimmten Zustand herstellen oder den Mitnahmestapler mittels Bedienbefehlen auf eine Art und Weise bedienen, dass der aktuellen Situation Rechnung getragen wird, zum Beispiel geringere Lasten bewegen und/oder eine geringere Fahrgeschwindigkeit wählen.

Alternativ oder zusätzlich kann eine Steuerung vorgesehen sein, welche dazu konfiguriert ist, in Abhängigkeit des automatischen bestimmten Ein- oder Ausfahrzustandes des wenigstens einen der wenigstens zwei Teleskoparme eine erlaubte maximale Fahrgeschwindigkeit des Mitnahmestaplers festzulegen. Eine Erhöhung der Sicherheit ergibt sich dadurch, dass unabhängig von einer Geschwindigkeitsvorgabe eines Bedieners oder Fahrers des Mitnahmestaplers mittels eines Bedienbefehls nur eine Bedienung des Mitnahmestaplers möglich ist, welche der aktuellen Situation Rechnung trägt. Beispielsweise kann eine reduzierte Geschwindigkeit durch die Steuerung vorgegeben werden, wenn der wenigstens eine Teleskoparm nicht dem vorbestimmten Zustand entspricht, beispielsweise nicht voll ausgefahren ist.

Zusätzlich oder alternativ kann eine Messvorrichtung zum automatischen Bestimmen einer vom Lastaufnahmemittel aufgenommenen Last vorgesehen sein, welche dazu konfiguriert ist (entweder selbst oder über die Steuerung), in Abhängigkeit der automatisch bestimmten Last und/oder des automatischen bestimmten Ein- oder Ausfahrzustandes des wenigstens einen der wenigstens zwei Teleskoparme eine erlaubte maximale Fahrgeschwindigkeit des Mitnahmestaplers festzulegen. Hierdurch ergibt sich ersichtlich eine weitere Erhöhung der Sicherheit.

Zusätzlich oder alternativ kann zumindest ein Sensor zum automatischen Erkennen einer Fahrzeugneigung vorgesehen sein und die Steuerung dazu konfiguriert sein, in Abhängigkeit der automatisch bestimmten Fahrzeugneigung und/oder der automatisch bestimmten Last und/oder des automatischen bestimmten Ein- oder Ausfahrzustandes des wenigstens einen der wenigstens zwei Teleskoparme eine erlaubte maximale Fahrgeschwindigkeit des Mitnahmestaplers festzulegen.

Zusätzlich oder alternativ kann zumindest ein Sensor zum automatischen Erkennen einer Hubhöhe des Lastaufnahmemittels vorgesehen sein und die Steuerung dazu konfiguriert sein, in Abhängigkeit der automatisch bestimmten Fahrzeugneigung und/oder der automatisch bestimmten Last und/oder der automatisch bestimmten Hubhöhe und/oder des automatischen bestimmten Ein- oder Ausfahrzustandes des wenigstens einen der wenigstens zwei Teleskoparme eine erlaubte maximale Fahrgeschwindigkeit des Mitnahmestaplers festzulegen.

Bei allen diskutierten Ausführungsbeispielen kann die Vorrichtung zum automatischen Bestimmen eines Ein- oder Ausfahrzustandes des wenigstens einen der wenigstens zwei Teleskoparme dazu konfiguriert sein, zu bestimmen, ob wenigstens ein vorbestimmter Zustand vorliegt:
- in Form eines voll eingefahrenen Zustands und/oder eines voll ausgefahrenen Zustands, und/oder
- in Form wenigstens eines Zustands, welcher verschieden vom voll eingefahrenen Zustand und dem voll ausgefahrenen Zustand ist (beispielsweise ein Zustand in der Nähe des voll eingefahrenen Zustands und/oder des voll ausgefahrenen Zustands oder sogar eine Bestimmung einer Vielzahl von Zuständen zwischen diesen beiden Zuständen, bevorzugt eine fein gestufte oder stufenlose Bestimmung des Zustands)

Das Ein- und Ausfahren der Teleskoparme kann manuell oder motorisch erfolgen, beispielsweise können die Teleskoparme selbst als Hydraulikzylinder ausgeführt sein. Das Ein- und Ausfahren der Teleskoparme erfolgt bevorzugt synchron, besonders bevorzugt über einen gemeinsamen Motor.

Natürlich kann pro Teleskoparm mehr als nur ein Rad vorgesehen sein.

Es kann vorgesehen sein, dass nur jenes Rad oder jene Räder antreibbar sind, welche nicht an einem Teleskoparm angeordnet sind.

Bevorzugt ist vorgesehen, dass die Räder unmittelbaren Bodenkontakt haben. Alternativ kann vorgesehen sein, dass wenigstens zwei oder alle Räder indirekt über eine Fahrkette oder Fahrraupe Bodenkontakt haben.

Bei der Vorrichtung zum automatischen Bestimmen eines Ein- oder Ausfahrzustandes des wenigstens einen der wenigstens zwei Teleskoparme kann es sich im einfachsten Fall um einen oder mehrere Endschalter handeln. Für eine fein gestufte oder stufenlose Bestimmung können inkrementelle oder absolute Positionsgeber, wie sie aus dem Stand der Technik hinlänglich bekannt sind, verwendet werden.

Bei den in Bezug auf die einzelnen Ausführungsformen diskutierten Steuerungen kann es sich um unterschiedliche Steuerungen handeln oder um ein und dieselbe Steuerung. Beispielsweise kann es sich um eine zentrale Steuerung des Mitnahmestaplers wie eine Motorsteuerung handeln, welche auch die Bedienbefehle eines Fahrers des Mitnahmestaplers registriert und über die Aktuatoren (das wenigstens eine angetriebene Rad, das Lastaufnahmemittel usw.) ausführt (natürlich nur insoweit nicht die Steuerung in Abhängigkeit des automatisch bestimmten Ein- oder Ausfahrzustandes des wenigstens einen der wenigstens zwei Teleskoparme etwas anderes befiehlt).

Die Teleskoparme können in einer Richtung ein- und ausfahrbar sein, welche einer Vorwärts- und Rückwärtsrichtung des Mitnahmestaplers entspricht.

Ausführungsformen werden anhand der Figuren diskutiert.
Figur 1 zeigt eine isometrische Ansicht eines Mitnahmestaplers gemäß der Offenbarung.
Figur 2 zeigt eine schematische Darstellung eines Mitnahmestaplers gemäß der Offenbarung.
Figur 3 zeigt eine Möglichkeit, bei einem in den Figuren 1 und 2 gezeigten Mitnahmestapler die erlaubte maximale Fahrgeschwindigkeit in Abhängigkeit des durch die Vorrichtung automatisch bestimmten Ein- oder Ausfahrzustandes der wenigstens zwei Teleskoparme festzulegen.

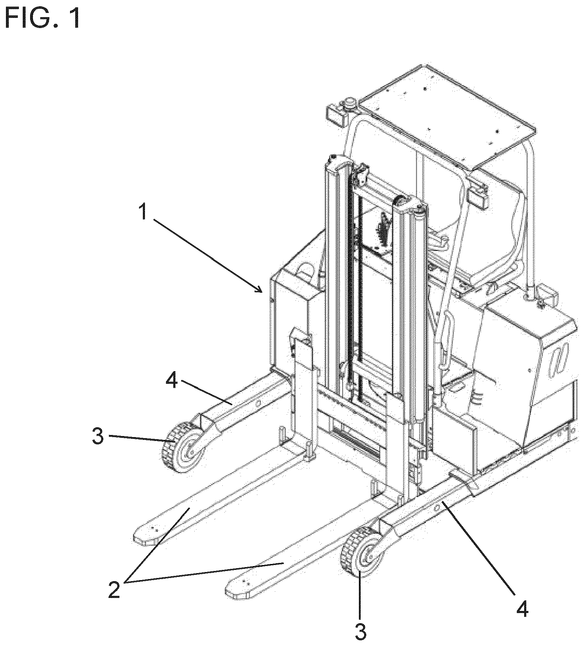

Der in Figur 1 dargestellte Mitnahmestapler 1 weist in bekannter Weise auf:
- ein anhebbares und absenkbares Lastaufnahmemittel 2
- wenigstens drei Räder 3, mit welchen der Mitnahmestapler 1 auf einem Untergrund mit einer Fahrgeschwindigkeit v verfahrbar ist, wobei von den wenigstens drei Rädern 3 wenigstens ein Rad 3 motorisch antreibbar ist und wenigstens zwei Räder 3 an jeweils einem ein- und ausfahrbaren Teleskoparm 4 angeordnet sind
- einen Motor 5 zum Antreiben des wenigstens einen antreibbaren Rads 3
- einer Motorsteuerung 6 zum Ansteuern des Motors 5 unter Berücksichtigung der Bedienbefehle eines Fahrers des Mitnahmestaplers (Berücksichtigung, weil ja ggf. die Steuerung beschränkend eingreift)

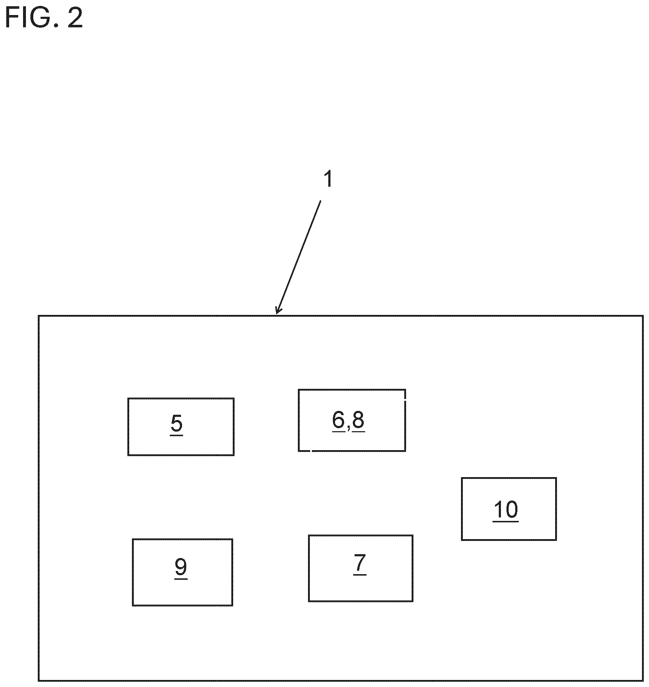

Anders als im Stand der Technik ist eine Vorrichtung 7 zum automatischen Bestimmen eines Ein- oder Ausfahrzustandes der wenigstens zwei Teleskoparme 4 vorgesehen (vgl. Figur 2).

Figur 2 zeigt schematisch, dass eine (hier beispielhaft einzige und als Teil der Motorsteuerung 6 ausgebildete) Steuerung 8 dazu konfiguriert ist, in Abhängigkeit des durch die Vorrichtung 7 automatisch bestimmten Ein- oder Ausfahrzustandes der wenigstens zwei Teleskoparme 4:
- eine erlaubte maximale Fahrgeschwindigkeit vₘₐₓ des Mitnahmestaplers 1 festzulegen, ggf. auch in Abhängigkeit einer durch eine Messvorrichtung 10 automatisch bestimmten Last; und/oder
- eine Signalvorrichtung 9 zur Abgabe oder Anzeige eines Signals anzusteuern

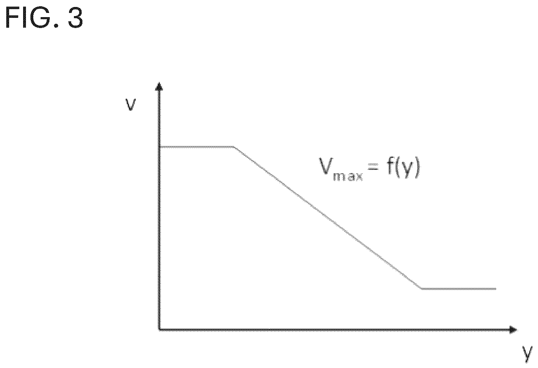

Wie bei einem in den Figuren 1 und 2 gezeigten Mitnahmestapler die erlaubte maximale Fahrgeschwindigkeit vₘₐₓ in Abhängigkeit des durch die Vorrichtung 7 automatisch bestimmten Ein- oder Ausfahrzustandes der wenigstens zwei Teleskoparme 4 festgelegt werden kann, ist beispielhaft in Figur 3 gezeigt.

Die Größe y bezeichnet hier den Ausfahrzustand, welcher mit zunehmendem Abstand vom Koordinatenursprung abnimmt. Der Punkt ganz links bezeichnet daher ein maximales y und damit einen maximalen Ausfahrzustand, der Punkt ganz rechts bezeichnet ein minimales y und damit den Einfahrzustand. In Abhängigkeit von y wird die erlaubte maximale Fahrgeschwindigkeit vₘₐₓ unterschiedlich festgelegt: höher bis zu einem vorgegebenen Ausfahrzustand, dann (hier beispielsweise linear) abnehmend bis zu einem minimalen Wert bis zum Einfahrzustand.

Wie diskutiert, könnten neben dem durch die Vorrichtung 7 automatisch bestimmten Ein- oder Ausfahrzustand der wenigstens zwei Teleskoparme 4 weitere Größe für die Festlegung der erlaubten maximalen Fahrgeschwindigkeit vₘₐₓ herangezogen werden, wie z. B**.** eine automatisch bestimmte Last und/oder eine automatisch bestimmte Fahrzeugneigung und/oder eine automatisch bestimmte Hubhöhe. In diesem Fall könnte z. B**.** anstelle einer einzigen Kurve eine Kurvenschar vorgesehen sein, wobei jede Kurve der Kurvenschar für eine bestimmte Last und/oder eine bestimmte Fahrzeugneigung und/oder eine bestimmte Hubhöhe heranzuziehen ist.

### Bezugszeichen:

- 1: Mitnahmestapler
- 2: Lastaufnahmemittel, zum Beispiel Gabel
- 3: Rad
- 4: Teleskoparm
- 5: Motor
- 6: Motorsteuerung
- 7: Vorrichtung zum automatischen Bestimmen eines Ein- oder Ausfahrzustandes der wenigstens zwei Teleskoparme
- 8: Steuerung
- 9: Signalvorrichtung
- 10: Messvorrichtung zum automatischen Bestimmen einer vom Lastaufnahmemittel aufgenommenen Last

- v: Fahrgeschwindigkeit des Mitnahmestaplers
- vₘₐₓ: erlaubte maximale Fahrgeschwindigkeit des Mitnahmestaplers

## Patentansprüche

1. Mitnahmestapler (1), mit wenigstens:
- einem anhebbaren und absenkbaren Lastaufnahmemittel (2)
- wenigstens drei Rädern (3), mit welchen der Mitnahmestapler (1) auf einem Untergrund mit einer Fahrgeschwindigkeit (v) verfahrbar ist, wobei von den wenigstens drei Rädern (3) wenigstens ein Rad (3) motorisch antreibbar ist und wenigstens zwei Räder (3) an jeweils einem ein- und ausfahrbaren Teleskoparm (4) angeordnet sind
- einem Motor (5) zum Antreiben des wenigstens einen antreibbaren Rads (3)
- einer Motorsteuerung (6) zum Ansteuern des Motors (5) unter Berücksichtigung eines Bedienbefehls eines Bedieners, vorzugsweise Fahrers, des Mitnahmestaplers (1)
**dadurch gekennzeichnet, dass** der Mitnahmestapler (1) eine Vorrichtung (7) zum automatischen Bestimmen eines Ein- oder Ausfahrzustandes wenigstens eines der wenigstens zwei Teleskoparme (4) aufweist.

2. Mitnahmestapler nach dem vorangehenden Anspruch, wobei eine Vorrichtung, vorzugsweise eine Steuerung (8), vorgesehen ist, welche dazu konfiguriert ist, in Abhängigkeit des durch die Vorrichtung (7) automatisch bestimmten Ein- oder Ausfahrzustandes des wenigstens einen der wenigstens zwei Teleskoparme (4) eine Signalvorrichtung (9) zur Abgabe oder Anzeige eines Signals anzusteuern.

3. Mitnahmestapler nach einem der beiden vorangehenden Ansprüche, wobei eine Steuerung (8) vorgesehen ist, welche dazu konfiguriert ist, in Abhängigkeit des durch die Vorrichtung (7) automatisch bestimmten Ein- oder Ausfahrzustandes des wenigstens einen der wenigstens zwei Teleskoparme (4) eine erlaubte maximale Fahrgeschwindigkeit (vₘₐₓ) des Mitnahmestaplers (1) festzulegen.

4. Mitnahmestapler nach wenigstens einem der vorangehenden Ansprüche, wobei eine Messvorrichtung (10) zum automatischen Bestimmen einer vom Lastaufnahmemittel (2) aufgenommenen Last vorgesehen ist und die Steuerung (8) dazu konfiguriert ist, in Abhängigkeit der automatisch bestimmten Last und/oder des automatischen bestimmten Ein- oder Ausfahrzustandes des wenigstens einen der wenigstens zwei Teleskoparme (4) eine erlaubte maximale Fahrgeschwindigkeit (vₘₐₓ) des Mitnahmestaplers (1) festzulegen.

5. Mitnahmestapler nach wenigstens einem der vorangehenden Ansprüche, wobei zumindest ein Sensor zum automatischen Erkennen einer Fahrzeugneigung vorgesehen ist und die Steuerung (8) dazu konfiguriert ist, in Abhängigkeit der automatisch bestimmten Fahrzeugneigung und/oder der automatisch bestimmten Last und/oder des automatischen bestimmten Ein- oder Ausfahrzustandes des wenigstens einen der wenigstens zwei Teleskoparme (4) eine erlaubte maximale Fahrgeschwindigkeit (vₘₐₓ) des Mitnahmestaplers (1) festzulegen.

6. Mitnahmestapler nach wenigstens einem der vorangehenden Ansprüche, wobei zumindest ein Sensor zum automatischen Erkennen einer Hubhöhe des Lastaufnahmemittels (2) vorgesehen ist und die Steuerung (8) dazu konfiguriert ist, in Abhängigkeit der automatisch bestimmten Fahrzeugneigung und/oder der automatisch bestimmten Last und/oder der automatisch bestimmten Hubhöhe und/oder des automatischen bestimmten Ein- oder Ausfahrzustandes des wenigstens einen der wenigstens zwei Teleskoparme (4) eine erlaubte maximale Fahrgeschwindigkeit (vₘₐₓ) des Mitnahmestaplers (1) festzulegen.

7. Mitnahmestapler nach wenigstens einem der vorangehenden Ansprüche, wobei die Vorrichtung (7) zum automatischen Bestimmen eines Ein- oder Ausfahrzustandes des wenigstens einen der wenigstens zwei Teleskoparme (4) dazu konfiguriert ist, zu bestimmen, ob wenigstens ein vorbestimmter Zustand vorliegt:
- in Form eines voll eingefahrenen Zustands und/oder eines voll ausgefahrenen Zustands, und/oder
- in Form wenigstens eines Zustands, welcher verschieden vom voll eingefahrenen Zustand und dem voll ausgefahrenen Zustand ist
